# EUROPÄISCHE PATENTSCHRIFT

(11) **EP 1 544 519 B1**
(45) Veröffentlichungstag und Bekanntmachung des Hinweises auf die Patenterteilung: **04.07.2007**
(21) Anmeldenummer: 04027957.2
(22) Anmeldetag: 25.11.2004
(51) Int. Cl.: F16J 15/08, F16J 15/12

(54) **Verfahren zur Erzeugung von Dichtbereichen im Bereich einer Flachdichtung**
Method for making a sealed zone in a flat gasket
Méthode de réalisation d'une zone d'étanchéité d'un joint plat

(30) Priorität: 20.12.2003 DE 10360180
(43) Veröffentlichungstag der Anmeldung: 22.06.2005
(73) Patentinhaber: Federal-Mogul Sealing Systems Bretten GmbH & Co. KG, 75015 Bretten (DE)
(72) Erfinder: Salameh, Ralf, 75053 Gondelsheim (DE); Seibert, Gerhard, 76185 Karlsruhe (DE)

(56) Entgegenhaltungen:
- US-A- 5 267 740
- US-B1- 6 371 489

## Beschreibung

Die Erfindung betrifft ein Verfahren zur Erzeugung mindestens eines Dichtbereiches zwischen über Stege miteinander verbundenen flachen Trägerelementen im Bereich einer Flachdichtung, indem die Stege gegenüber der Wandstärke der Trägerelemente dünner ausgebildet werden, dergestalt, dass die Stege mit zueinander versetzten Prägebereichen versehen werden und der jeweilige Dichtbereich an den Randbereichen der Trägerelemente angeformt wird.

Allgemein bekannt ist, Trägerrahmen von Flachdichtungen mittels mittig verprägter Stege miteinander zu verbinden. Die den Dichtbereich bildenden Dichtlippen laufen an den Stegen sowohl oben als auch unten vorbei. Da die Stege aus Stabilitäts- und Fertigungsgründen nicht beliebig dünn ausgeführt werden können, besteht bei dünnen Trägerelementen die Gefahr der Überpressung der Dichtlippen. Für kleinere Trägerrahmendicken kann somit mit der bekannten Ausführung keine für die Praxis einsetzbare Lösung herbeigeführt werden.

Durch die US-A 5,267,740 ist eine Metall-Zylinderkopfdichtung mit integrierten Dichthilfen bekannt geworden. Zur Erzeugung von Medien führenden Durchgangslöchern werden selbige zum Teil mit ineinanderlaufenden Stanzbereichen versehen, wobei Verbindungsbereiche zwischen dem Trägermaterial und einem Hilfsmittel gegeben sind. Das Hilfsmittel wird dann mit einem, seinen eigenen Randbereich sowie den Randbereich des umgebenden Trägermateriales übergreifenden Dichtprofil versehen. Die hier beschriebene Möglichkeit zur Abdichtung ist vom Fertigungsablauf her aufwendig.
Aus der US 6371489 B1 ist eine aus zwei Metalllagen geschichtete metallische Flachdichtung zu entnehmen, deren einzelne Lagen jeweils in eine Richtung gekröpfte Stege aufweisen. Die Stege sind so gekröpft, dass sie in Richtung der einzelnen Lage gerichtet sind und so nicht aus der Oberfläche der einzelnen Lage hervorstehen. Bei einer einlagigen Flachdichtung ist diese Konstruktion nicht ausführbar, da dann die Stege aus der Oberfläche der Dichtung hervorstehen und damit eine Überpressung des Dichtbereiches hervorrufen.

Der Erfindung liegt die Aufgabe zugrunde, einerseits ein Verfahren vorzuschlagen, mit welchem die Stege zwischen den Trägerelementen so ausgebildet werden können, dass eine Überpressung des/der Dichtbereiche(s) vermieden wird. Andererseits soll eine Flachdichtung mit optimierter Stegausbildung und Anbindung des Dichtbereiches an den Trägerelementen bereitgestellt werden.

Die Aufgabe wird gelöst durch ein Verfahren gemäß der Merkmale des Patentanspruchs 1.
Die Aufgabe wird auch gelöst durch eine Flachdichtung gemäß des Patentanspruchs 2. Vorteilhafte Weiterbildungen der erfindungsgemäßen Flachdichtung sind den zugehörigen gegenständlichen Unteransprüchen zu entnehmen.

Mit dem Erfindungsgegenstand können vorzugsweise metallische Trägerrahmen mit Stegen verbunden werden, die abgestuft verprägt sind. Die Stege werden vorteilhafterweise auf einer Seite von oben und auf der anderen Seite von unten verprägt. Die Verprägungen werden hierbei versetzt ausgeführt. Somit weist ein jeder Steg mindestens einen oberen und mindestens einen unteren Prägebereich auf, wobei beide Prägebereiche über einen Verbindungssteg miteinander verbunden sind. Die Verprägungstiefe und die Verprägungsbreite kann, je nach Dicke der Trägerelemente, variabel eingestellt werden, so dass unterschiedlichen Anwendungsfällen Rechnung getragen werden kann. Der Verbindungssteg zwischen den einzelnen Prägebereichen bringt hierbei die notwendige Stabilität des Steges an den Prägebereichen.

Durch diese Maßnahme kann die Dichtkontur im Bereich der Stege aufgeteilt werden. Die obere Dichtlippenkontur läuft über den oberen Prägebereich, während die untere Dichtlippenkontur über den unteren Prägebereich läuft. Der vorhandene Freiraum im Dichtbereich kann somit vergrößert werden.

Mit dem Erfindungsgegenstand sind folgende Vorteile verbunden:
- Einsatz dünnerer Trägerelemente als bisher (Materialeinsparung);
- Bedingt durch die versetzten Geometrien des Dichtungsbereiches nimmt die Gestaltungsfreiheit für die Steg- und Profilgeometrie zu;
- Die Verprägung der Stege (Stegdicke) muss nicht bis an den Grenzbereich geführt werden;
- Der Freiraum der Dichtlippe im Bereich der Stege wird erhöht;
- Die Stege werden durch den Mittelbund zwischen beiden Prägebereichen fixiert.

Der Erfindungsgegenstand ist anhand eines Ausführungsbeispiels in der Zeichnung dargestellt und wird wie folgt beschrieben. Es zeigen:
- Figur 1: Teildarstellung einer Flachdichtung;
- Figur 2: Ausschnitt aus Figur 1, beinhaltend die Trägerelemente mit angeformten Stegen;
- Figur 3: Ausschnitt aus Figur 1, darüber hinaus beinhaltend Teile des Dichtbereiches;
- Figur 4: Teilansicht des Dichtbereiches gemäß Figur 3 von oben;
- Figur 5: Teilansicht des Dichtbereiches gemäß Figur 3 von unten;
- Figur 6: Querschnitt durch Figur 4 gemäß Linie A-A.

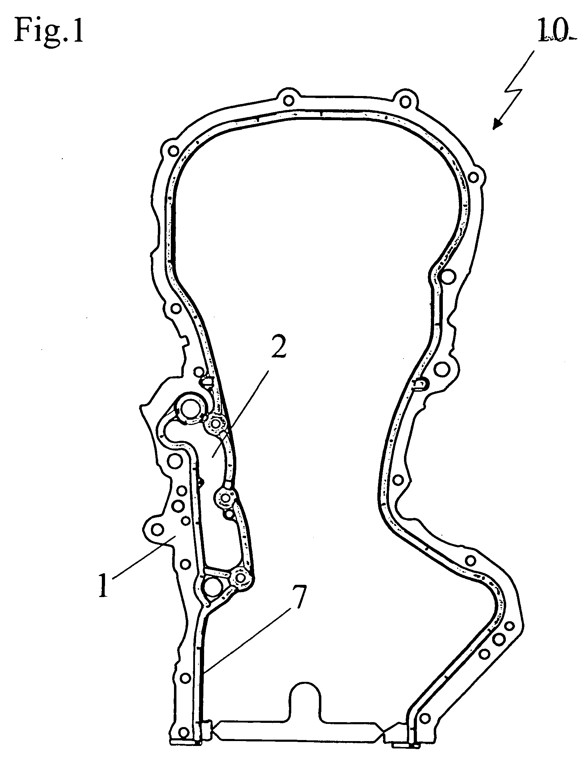

Figur 1 zeigt als Teildarstellung eine Flachdichtung 10 in der Draufsicht. Erkennbar sind innere und äußere Trägerelemente 1, 2 sowie ein Dichtbereich 7.

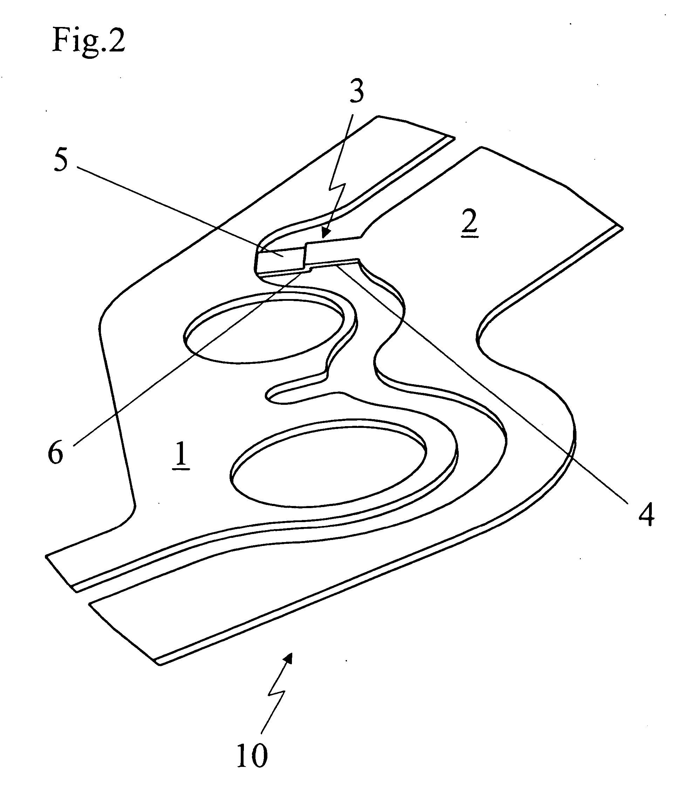

Figur 2 zeigt als Prinzipskizze zwei metallische Trägerelemente 1, 2, die über Stege 3 miteinander verbunden sind. Der jeweilige Steg 3 umfasst einen ersten Prägebereich 4, der mit dem Trägerelement 2 verbunden ist und einen zweiten Prägebereich 5, der mit dem Trägerelement 1 zusammenwirkt. Die Prägebereiche 4, 5 sind über einen Verbindungssteg 6 einstückig miteinander verbunden. In Figur 1 ist lediglich ein einzelner Steg 3 dargestellt, wobei die zu erzeugende Flachdichtung 10 zwischen den Trägerelementen 1, 2 eine Vielzahl derartiger Stege 3 aufweist. Die Verprägungstiefe und die Verprägungsbreite der Prägebereiche 4, 5 des Steges 3 kann - je nach erforderlicher Dicke der Trägerelemente - variabel vorgesehen werden.

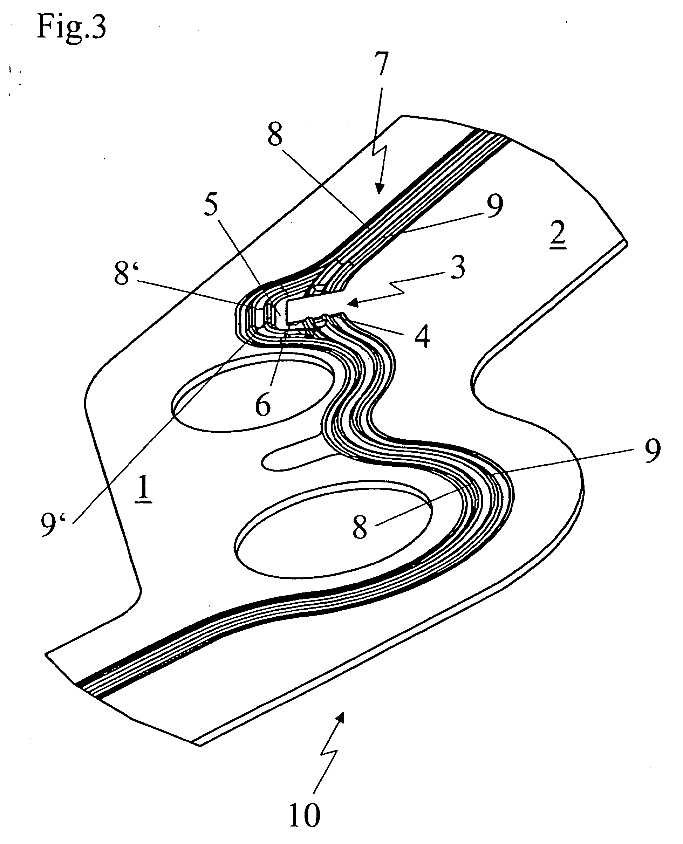

Figur 3 zeigt einen etwas anderen Querschnitt der Trägerelemente 1, 2 der Flachdichtung 10, wobei hier ein Dichtbereich 7 erkennbar ist, der mehrere Dichtlippen 8, 9, 8', 9' enthält. Erkennbar ist der Steg 3 sowie der zwischen den Prägebereichen 4, 5 vorgesehene Verbindungssteg 6. Die Dichtlippen 8, 9 laufen hierbei im Prägebereich 4 weiter, während sie im Prägebereich 5 auf dem Steg 3, unter Bildung der Dichtlippen 8', 9', verlaufen.

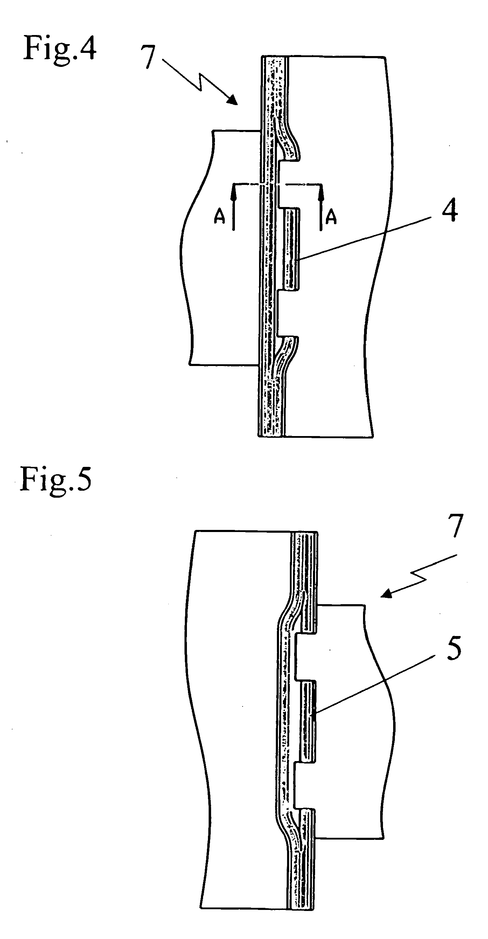

Die Figuren 4 und 5 zeigen den Verlauf des Dichtbereiches 7, zum einen von oben und zum anderen von unten. Erkennbar sind die Prägebereiche 4 und 5.

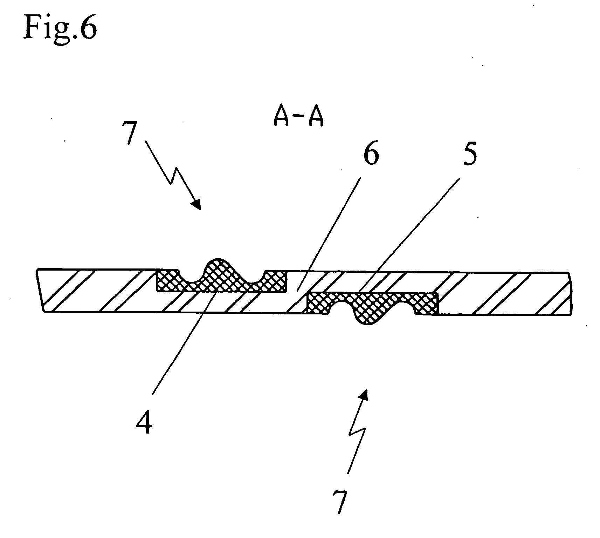

Figur 6 zeigt einen Schnitt gemäß der Linie A-A der Figur 4. Erkennbar sind die Prägebereiche 4 und 5 sowie der Verbindungssteg 6 sowie der zugehörige, im Prägebereich 4, 5 verlaufende Dichtbereich 7.

## Patentansprüche

1. Verfahren zur Erzeugung mindestens eines Dichtbereiches (7) zwischen über Stege (3) miteinander verbundenen flachen Trägerelementen (1, 2) im Bereich einer Flachdichtung, indem die Stege (3) gegenüber der Wandstärke der Trägerelemente (1, 2) dünner ausgebildet werden, dergestalt, dass die Stege (3) mit zueinander versetzten Prägebereichen (4, 5) versehen werden und der jeweilige Dichtbereich (7) an den Randbereichen der Trägerelemente (1, 2) angeformt wird, **dadurch gekenzeichnet, dass** jeder Steg (3) mit mindestens einem oberen (4) und einem unteren (5) Prägebereich (4,5) versehen wird, wobei die Prägebereiche (4,5) unter Bildung eines Verbindungssteges (6) mit einem vorgebbaren Abstand zueinander ausgebildet werden, so dass eine Dichtkontur im Bereich der Stege (3) so aufgeteilt ist, dass eine obere Dichtlippenkontur über den oberen Prägebereich (4) läuft während eine untere Dichtlippenkontur über den unteren Prägebereich (5) läuft.

2. Flachdichtung, beinhaltend mehrere Trägerelemente (1, 2), die über Stege (3) miteinander verbunden sind und der Raum zwischen den Trägerelementen (1, 2), unter Einbeziehung der Stege (3), mit einem, mindestens einen Dichtbereich (7) bildenden Elastomermaterial ausgefüllt ist, wobei die Stege (3) mit zueinander versetzten Prägebereichen (4, 5) versehen sind, **dadurch gekennzeichnet, dass** jeder Steg (3) mit mindestens einem oberen (4) und einem unteren (5) Prägebereich (4,5) versehen ist, wobei die Prägebereiche (4,5) unter Bildung eines Verbindungssteges (6) mit einem vorgebbaren Abstand zueinander ausgebildet sind, so dass eine Dichtkontur im Bereich der Stege (3) so aufgeteilt ist, dass eine obere Dichtlippenkontur über den oberen Prägebereich (4) läuft während eine untere Dichtlippenkontur über den unteren Prägebereich (5) läuft.

3. Flachdichtung nach Anspruch 2, **dadurch gekennzeichnet, dass** die Verprägungstiefe und/oder die Verprägungsbreite der Prägebereiche (4, 5) gleich ausgebildet ist.

4. Flachdichtung nach Anspruch 2, **dadurch gekennzeichnet, dass** die Verprägungstiefe und/oder die Verprägungsbreite der Prägebereiche (4, 5) ungleich ausgebildet ist.

## Claims

1. Method for the production of at least one sealed zone (7) in a flat gasket between flat carrier elements (1, 2), which are interlinked by way of ligaments (3), by forming the ligaments (3) so as to be thinner in relation to the wall thickness of the carrier elements (1, 2) in such a manner that the ligaments (3) are provided with stamped areas (4, 5), which are offset against each other, and the relevant sealed zone (7) is moulded in the edge zones of the carrier elements (1, 2), **characterised in that** each ligament (3) has at least one top (4) and at least one bottom (5) stamped zone (4, 5), whereby the stamped zones (4, 5) are formed with a specifiable distance to each other thereby forming a connecting ligament (6) such that a sealing contour in the region of the ligaments (3) is divided so that a top sealing lip contour runs over the top stamped zone 94), whilst a bottom sealing lip contour runs over the bottom stamped zone (5).

2. Flat gasket containing a plurality of carrier elements (1, 2) which are interlinked by way of ligaments (3) and the space between the carrier elements (1, 2), including the ligaments (3), is filled with an elastomer material creating at least one sealed zone (7) whereby the ligaments (3) are provided with stamped areas (4, 5) which are offset against each other, **characterised in that** each ligament (3) is provided with at least one top (4) and one bottom (5) stamped zone (4, 5) whereby the stamped zones (4, 5) are formed with a specifiable distance to each other thereby forming a connecting ligament (6) such that a sealing contour in the region of the ligaments (3) is divided so that a top sealing lip contour runs over the top stamped zone 94), whilst a bottom sealing lip contour runs over the bottom stamped zone (5).

3. Flat gasket according to claim 2, **characterised in that** the stamping depth and/or the stamping width of stamped zones (4, 5) is formed equally.

4. Flat gasket according to claim 2, **characterised in that** the stamping depth and/or the stamping width of stamped zones (4, 5) is formed unequally.

## Revendications

1. Procédé de réalisation d'au moins une zone d'étanchement (7) entre des éléments aplatis de support (1, 2) reliés l'un à l'autre par l'intermédiaire de membrures (3), dans la région d'une garniture d'étanchement aplatie, lesdites membrures (3) étant de réalisation plus mince vis-à-vis de l'épaisseur de paroi desdits éléments de support (1, 2), de façon telle que lesdites membrures (3) soient munies de régions matricées (4, 5) mutuellement décalées, et que la zone d'étanchement considérée (7) soit ménagée d'un seul tenant avec les régions marginales desdits éléments de support (1, 2), **caractérisé par le fait que** chaque membrure (3) est pourvue de régions matricées (4, 5), à raison d'au moins une région supérieure (4) et d'au moins une région inférieure (5), lesdites régions matricées (4, 5) étant réalisées avec un espacement mutuel pouvant être préétabli, en formant une membrure de solidarisation (6), de telle sorte qu'un profil d'étanchement offre, dans la région des membrures (3), une subdivision telle qu'un profil supérieur à lèvres d'étanchement couvre l'étendue de la région matricée (4) supérieure, tandis qu'un profil inférieur à lèvres d'étanchement couvre l'étendue de la région matricée (5) inférieure.

2. Garniture d'étanchement aplatie englobant plusieurs éléments de support (1, 2) mutuellement reliés par l'intermédiaire de membrures (3), l'espace situé entre lesdits éléments de support (1, 2) étant comblé, avec intégration desdites membrures (3), par un matériau élastomère donnant naissance à au moins une zone d'étanchement (7), lesdites membrures (3) étant munies de régions matricées (4, 5) mutuellement décalées, **caractérisée par le fait que** chaque membrure (3) est pourvue de régions matricées (4, 5), à raison d'au moins une région supérieure (4) et d'au moins une région inférieure (5), lesdites régions matricées (4, 5) étant réalisées avec un espacement mutuel pouvant être préétabli, en formant une membrure de solidarisation (6), de façon telle qu'un profil d'étanchement offre, dans la région des membrures (3), une subdivision telle qu'un profil supérieur à lèvres d'étanchement couvre l'étendue de la région matricée (4) supérieure, tandis qu'un profil inférieur à lèvres d'étanchement couvre l'étendue de la région matricée (5) inférieure.

3. Garniture d'étanchement aplatie selon la revendication 2, **caractérisée par le fait que** la profondeur de matriçage et/ou la largeur de matriçage des régions matricées (4, 5) est (sont) de réalisation identique.

4. Garniture d'étanchement aplatie selon la revendication 2, **caractérisée par le fait que** la profondeur de matriçage et/ou la largeur de matriçage des régions matricées (4, 5) est (sont) de réalisations différentes.
